# EUROPEAN PATENT APPLICATION

(11) **EP 2 782 325 A2**
(43) Date of publication of application: **24.09.2014**
(21) Application number: 14157802.1
(22) Date of filing: 05.03.2014
(51) Int. Cl.: H04N 1/028

(54) **Image reading apparatus and sheet processing apparatus**

(30) Priority: 21.03.2013 JP 2013058943
(71) Applicant: Kabushiki Kaisha Toshiba, Minato-ku, Tokyo 105-8001 (JP)
(72) Inventor: Ikari, Seiji, Tokyo, Tokyo 105-8001 (JP); Miura, Junji, Tokyo, Tokyo 105-8001 (JP)
(74) Representative: Horn Kleimann Waitzhofer

(57) **Abstract**

According to one embodiment, an image reading apparatus includes an illumination unit (21) to irradiate a surface of a sheet (1) with light from an oblique direction at a predetermined angle of incidence (α), a reading unit (24) to receive light reflected from a reading range on the sheet (1) and to acquire a sheet image, and a reflecting mirror (22, 25) that is disposed in a direction of an angle of emission (α) that is equal to the angle of incidence (α), that has a specular surface that is parallel to the reading range (D), and that reflects light reflected from the sheet (1) toward the reading range (D) with the specular surface.

## Description

### FIELD

Embodiments described herein relate generally to an image reading apparatus and a sheet processing apparatus.

### BACKGROUND

Conventionally, sheet processing apparatuses that perform various types of inspections of sheets have been put to practical use. A sheet processing apparatus has an image reading apparatus that reads an image of a sheet. The sheet processing apparatus takes in sheets that are placed in a feed unit in such a manner that one sheet is taken in at a time, and conveys the sheets to the image reading apparatus.

The image reading apparatus has a light emitting unit (illumination device) and a light receiving unit (line image sensor). The image reading apparatus irradiates a sheet with visible light using the light emitting unit. The image reading apparatus reads light irradiated onto and reflected by the sheet and detects optical features (characteristics) of the sheet using the light receiving unit. The sheet processing apparatus identifies the sheet by comparing the detected characteristics with preset parameters.

An image reading apparatus as described above is required to acquire an image of a sheet with high accuracy so that the sheet processing apparatus can accurately identify the sheet. However, the gloss level may vary among sheets. Accordingly, there is a problem that the image reading result may vary depending on the orientation in which the light receiving unit of the image reading apparatus is placed.

### BRIEF DESCRIPTION OF THE DRAWINGS

FIG. 1 is a diagram for explaining a sheet processing apparatus according to one embodiment;
FIG. 2 is a diagram for explaining an image reading apparatus according to one embodiment;
FIG. 3 is a diagram for explaining an image reading apparatus according to one embodiment;
FIG. 4 is a diagram for explaining an image reading apparatus according to one embodiment;
FIG. 5 is a diagram for explaining an image reading apparatus according to one embodiment;
FIG. 6 is a diagram for explaining an image reading apparatus according to one embodiment;
FIG. 7 is a diagram for explaining an image reading apparatus according to one embodiment; and
FIG. 8 is a diagram for explaining an image reading apparatus according to one embodiment.

### DETAILED DESCRIPTION

According to one embodiment, there is provided an image reading apparatus including an illumination unit to irradiate a surface of a sheet with light from an oblique direction at a predetermined angle of incidence, a reading unit to receive light reflected from a reading range on the sheet and to acquire a sheet image, and a reflecting mirror that is disposed in a direction of an angle of emission that is equal to the angle of incidence, that has a specular surface that is parallel to the reading range, and that reflects light reflected from the sheet toward the reading range with the specular surface.

Referring to the accompanying drawings, the following is a detailed description of an image reading apparatus and a sheet processing apparatus according to one embodiment.

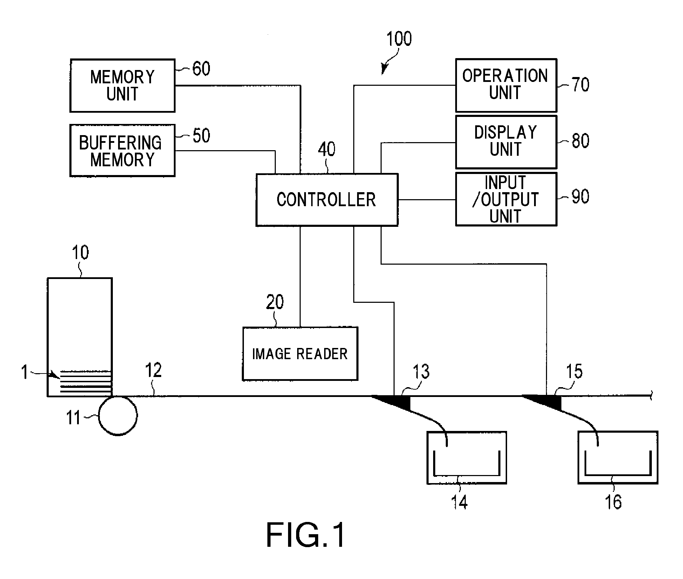

FIG. 1 shows an example of the configuration of a sheet processing apparatus 100 according to one embodiment.

The sheet processing apparatus 100 can determine the category, such as the denomination and generation, of a sheet 1, the authenticity of the sheet 1, the fitness of the sheet 1, and the like based on the result of detection by an image reading apparatus.

The sheet processing apparatus 100 includes a supply unit 10, a separation roller 11, a conveyor 12, a first gate 13, a first stacker 14, a second gate 15, a second stacker 16, an image reader 20, a controller 40, a buffering memory 50, a memory unit 60, an operation unit 70, a display unit 80, and an input/output unit 90. Moreover, the sheet processing apparatus 100 includes a cutting unit, which is not shown, downstream of the second gate 15.

The controller 40 performs integrated control of the operations of the various units of the sheet processing apparatus 100. The controller 40 includes a CPU, a random-access memory, a program memory, a nonvolatile memory, and the like. The CPU performs various types of arithmetic processing. The random-access memory temporarily stores the results of arithmetic operations performed by the CPU. The program memory and the nonvolatile memory store various programs to be executed by the CPU, control data, and the like. The controller 40 is capable of performing various types of processing by the CPU executing the programs stored in the program memory.

The supply unit 10 stocks sheets 1 to be fed into the sheet processing apparatus 100. The supply unit 10 collectively receives the sheets 1 in a state in which the sheets are laid one on top of another.

The separation roller 11 is provided at a lower end of the supply unit 10. In the case where the sheets 1 are placed in the supply unit 10, the separation roller 11 comes into contact with the lowest sheet of the placed sheets 1 in a stacking direction. Rotation of the separation roller 11 causes the sheets 1 that are put in the supply unit 10 to be fed into the inside of the sheet processing apparatus 100 on a sheet-by-sheet basis in an ascending order from the lowest sheet to the highest sheet with respect to the stacking direction.

For example, each time the separation roller 11 makes one rotation, one sheet 1 is fed. Thus, the sheets 1 are fed at a constant pitch by the separation roller 11. The sheets 1 that have been fed by the separation roller 11 are introduced into the conveyor 12.

The conveyor 12 is a conveyance unit that conveys the sheets 1 to the various units within the sheet processing apparatus 100. The conveyor 12 includes a conveyor belt, which is not shown, a drive pulley, which is not shown, and the like. In the conveyor 12, the drive pulley is driven by a drive motor, which is not shown. The conveyor belt is operated by the drive pulley.

The conveyor 12 conveys the sheets 1, which have been fed by the separation roller 11, on the conveyor belt at a constant speed. It should be noted that the side of the conveyor 12 that is close to the separation roller 11 will be described as "upstream side", and the side that is opposite to the upstream side will be described as "downstream side".

The image reader 20 acquires an image from a sheet 1 while the sheet 1 is conveyed by the conveyor 12. The image reader 20 includes, for example, a camera for acquiring an image from the sheet 1. The camera acquires an image (sheet image) from light reflected by the surface of the sheet 1. The image reader 20 transmits the detected sheet image to the controller 40.

The controller 40 determines the fitness of the sheet 1 based on the sheet image. More specifically, the controller 40 determines whether the sheet 1 is a fit sheet that is fit for reuse or an unfit sheet that is unfit for reuse.

Also, the controller 40 determines the authenticity of the sheet 1 based on the sheet image. More specifically, the controller 40 determines whether the sheet 1 is genuine or counterfeit.

Furthermore, the controller 40 determines the category, such as the denomination and generation, of the sheet 1 based on the sheet image. More specifically, the controller 40 functions as an identification unit that identifies the features of the sheet 1 based on preset reference parameters and the sheet image.

The first gate 13 and the second gate 15 are provided downstream of the image reader 20 along the conveyor 12. The first gate 13 and the second gate 15 are each operated based on control of the controller 40. The controller 40 controls the first gate 13 and the second gate 15 in accordance with the various determination results with respect to the sheet 1.

The first gate 13 switches the destination of the sheet 1 between the first stacker 14 and the second gate 15. The second gate 15 switches the destination of the sheet 1 between the second stacker 16 and the cutting unit.

The controller 40 controls the first gate 13 and the second gate 15 so that any sheet 1 that has been determined to be a fit sheet is conveyed to the first stacker 14 or the second stacker 16. More specifically, the controller 40 controls the various units so that fit sheets are sorted by denomination and stacked.

Also, the controller 40 controls the first gate 13 and the second gate 15 so that any sheet 1 that has been determined to be an unfit sheet is conveyed to the cutting unit that is provided downstream of the second gate 15. More specifically, the controller 40 controls the various units so that any sheet 1 that has been determined to be an unfit sheet is conveyed to the cutting unit and cut by the cutting unit. That is to say, the first gate 13 and the second gate 15 sort sheets according to type. Therefore, the first gate 13 and the second gate 15 function as a sorting processor.

The controller 40 controls the gates so that any sheet 1 that has been determined to be a counterfeit is conveyed to a reject stacker, which is not shown. Furthermore, the controller 40 may also be configured to control the gates so that fit sheets are conveyed to different stackers depending on the category.

The buffering memory 50 stores various processing results. For example, the buffering memory 50 stores a sheet image acquired by the image reader 20. It should be noted that the random-access memory or the nonvolatile memory included in the controller 40 may be substituted for the buffering memory 50.

The memory unit 60 stores data such as various parameters that are used in the above-described identification processing. The memory unit 60, for example, stores parameters for each category of sheets 1 in advance. The controller 40 performs the identification processing based on the parameters stored in the memory unit 60 and the above-described sheet image. Thus, the controller 40 can determine the category, authenticity, and fitness of the sheet.

The operation unit 70 accepts various operation inputs from an operator through an operation unit. The operation unit 70 generates an operation signal based on an operation input by the operator, and transmits the generated operation signal to the controller 40.

The display unit 80 displays various types of screens based on control of the controller 40. For example, the display unit 80 displays various types of operation guidance, processing results, and the like to the operator. It should be noted that the operation unit 70 and the display unit 80 may also be formed as a single member serving as a touch panel.

The input/output unit 90 exchanges data with an external device or a storage medium that is connected to the sheet processing apparatus 100. For example, the input/output unit 90 may include a disk drive, a USB connector, a LAN connector, or other interfaces that enable data exchange. The sheet processing apparatus 100 can acquire data from an external device or a storage medium that is connected to the input/output unit 90. Moreover, the sheet processing apparatus 100 can also transmit the processing result to an external device or a storage medium that is connected to the input/output unit 90.

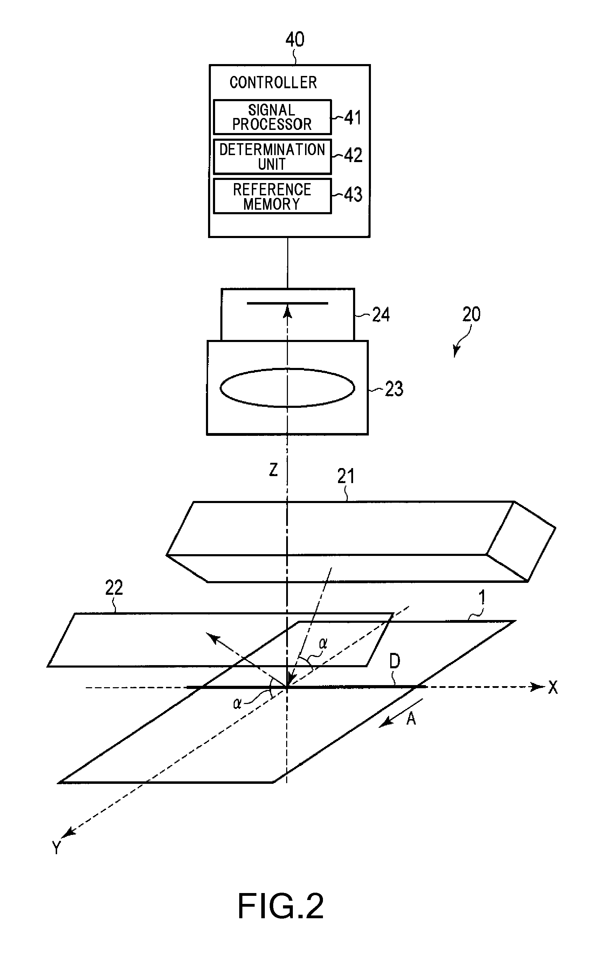

FIG. 2 shows an example of the configuration of the image reader 20 and the functionality of the controller 40. In FIG. 2, the image reader 20 is seen obliquely from above a conveying plane on which the sheet 1 is conveyed.

Note that in the example shown in FIG. 2, the directions X and Y are perpendicular to each other, the directions X and Z are perpendicular to each other, and the directions Y and Z are perpendicular to each other. The conveying plane is parallel to a plane that contains the directions X and Y. In this case, the light receiving optical axis of an optical system 23 is set to the Z axis.

Note that the sheet 1 is conveyed on the conveying plane at a constant speed in the direction of arrow A by the drive pulley in a state in which the sheet 1 is held by the conveyor belt of a conveyor 12. That is to say, the sheet 1 enters a reading range D of the image reader 20 at a constant speed.

The image reader 20 includes an illuminator 21, a reflecting mirror 22, the optical system 23, and a sensor 24. The illuminator 21 irradiates the sheet 1 with visible light while the sheet 1 is conveyed by the conveyor 12. The illuminator 21 irradiates light onto an irradiation range that is larger than at least the linear reading range D from which the optical system 23 and the sensor 24 can read an image.

The illuminator 21 includes a light source and an optical system. The light source is a device that emits light. For example, the light source may include an LED, an organic EL, a cold-cathode tube, a halogen light source, a fluorescent lamp, or other light emitting devices. The optical system collects and guides light radiated from the light source to the reading range D.

Note that the illuminator 21 is placed such that the irradiated light is incident on the conveying plane, on which the sheet 1 is conveyed, at an angle α. Therefore, light that is specularly reflected by the surface of the sheet 1 forms an angle α with the conveying plane of the sheet 1. On the other hand, light that is diffusely reflected by the surface of the sheet 1 spreads radially from a point on which the light is incident.

The reflecting mirror 22 includes a specular surface that reflects light. The reflecting mirror 22 is provided in a position at which it can reflect light that has been radiated from the illuminator 21 and specularly reflected by the sheet 1. Note that the specular surface of the reflecting mirror 22 is placed so as to contain a line segment that is parallel to the reading range D. In other words, the reflecting mirror 22 has a specular surface that is located at a uniform distance from the reading range D. Furthermore, the reflecting mirror 22 reflects light that has been specularly reflected by the surface of the sheet 1 within the reading range D and makes the reflected light incident on the reading range D. That is to say, the reflecting mirror 22 re-reflects light from the reading range D.

The optical system 23 and the sensor 24 may be, for example, a camera that captures an image from the linear reading range D that is parallel to the X axis. More specifically, the optical system 23 and the sensor 24 capture an image from the linear reading range D extending on the conveying plane of the sheet 1 in a direction that is perpendicular to a conveyance direction of the sheet 1. Note that the reading range D is formed so as to be longer than the width of the sheet 1. This makes it possible for the optical system 23 and the sensor 24 to capture an image that covers the entire width of the sheet 1 (i.e., image corresponding to a single line) at one time.

The optical system 23 includes a configuration that receives light and images the received light onto the sensor 24. This configuration may be, for example, a lens or a light guide member.

The sensor 24 is a line image sensor in which a plurality of light receiving elements such as charge coupled devices (CCDs) or complementary metal oxide semiconductors (CMOSes) are arranged in a line. The sensor 24 converts incident light into electric signals, or in other words, an image.

The light receiving optical axis of the optical system 23 is set to the Z axis. This means that the optical system 23 can receive light that is reflected from the reading range D in the direction of the Z axis. The optical system 23 receives the light from the reading range D and images the received light onto the sensor 24. Thus, the sensor 24 can capture an image of the reading range D.

Note that the sensor 24 successively captures images from the sheet 1 while the sheet 1 is conveyed by the conveyor 12, for example. Furthermore, the sensor 24 combines the successively captured images together. Thus, the image reader 20 can acquire an image of the entire sheet 1. The image reader 20 supplies the acquired image (sheet image) of the sheet 1 to the controller 40.

The controller 40 determines the authenticity, denomination, fitness, and the like of the sheet 1 based on the supplied sheet image.

The controller 40 performs integrated control of the operations of the various units of the sheet processing apparatus 100. The controller 40 includes a CPU, a random-access memory, a program memory, a nonvolatile memory, and the like. The CPU performs various types of arithmetic processing. The random-access memory temporarily stores the results of arithmetic operations performed by the CPU. The program memory and the nonvolatile memory store various programs to be executed by the CPU, control data, and the like. The controller 40 is capable of performing various types of processing by the CPU executing the programs stored in the program memory.

For example, the controller 40 functions as a signal processor 41 and a determination unit 42 by the CPU executing the programs. Also, the nonvolatile memory of the controller 40 functions as a reference memory 43 that preliminarily stores various determination references to be used as references for determination performed by the determination unit 42.

The signal processor 41 performs signal processing with respect to the sheet image supplied from the image reader 20. For example, the signal processor 41 can acquire various characteristics by performing signal processing with respect to the sheet image. For example, the signal processor 41 can generate a determination image or characteristics for use in various types of determinations by performing signal amplification, edge enhancement, brightness adjustment, and the like.

The determination unit 42 compares the determination image or characteristics generated by the signal processor 41 with the determination references stored in the reference memory 43, and determines the category, authenticity, fitness, and the like of the sheet 1 based on the comparison results. For example, if an image (reference image) serving as a reference is stored in the reference memory 43, the determination unit 42 compares the determination image generated by the signal processor 41 with the reference image stored in the reference memory 43, and determines the category, authenticity, fitness, and the like of the sheet 1 based on the comparison results. Also, for example, if characteristics (reference characteristics) serving as references are stored in the reference memory 43, the determination unit 42 compares the characteristics generated by the signal processor 41 with the reference characteristics stored in the reference memory 43, and determines the category, authenticity, fitness, and the like of the sheet 1 based on the comparison results.

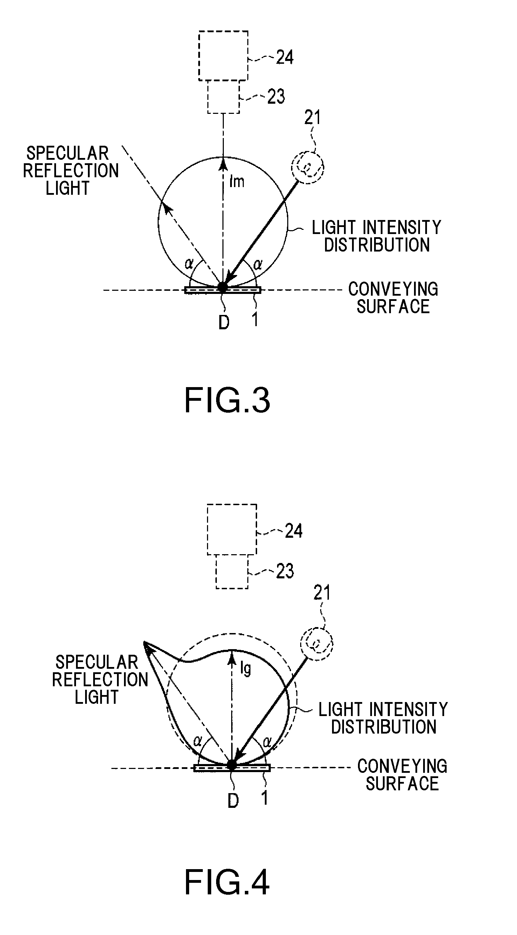

FIGS. 3 and 4 show examples of an intensity distribution of light irradiated onto the sheet 1. Note that FIG. 3 shows the light intensity distribution in the case where light is irradiated onto a sheet 1 that is not very glossy, and FIG. 4 shows the light intensity distribution in the case where light is irradiated onto a sheet 1 that is very glossy.

As shown in FIG. 3, in the case where the sheet 1 is not very glossy, light irradiated onto the sheet 1 from the illuminator 21 is diffusely reflected from the reading range D on the sheet 1 in a radial manner. Note that since the sheet 1 is not very glossy, specular reflection light of the light irradiated onto the sheet 1 from the illuminator 21 is less intense than that of the example shown in FIG. 4. Therefore, the reflection light is more uniformly distributed than that of the example shown in FIG. 4. In this case, the optical system 23 and the sensor 24 receive diffuse reflection light Im that is diffusely reflected from the reading range D in the direction of the Z axis.

On the other hand, as shown in FIG. 4, in the case where the sheet 1 is very glossy, light irradiated onto the sheet 1 from the illuminator 21 is diffusely reflected from the reading range D on the sheet 1 in a radial manner. However, since the sheet 1 is very glossy, specular reflection light of the light irradiated onto the sheet 1 from the illuminator 21 is more intense than that of the example shown in FIG. 3. Therefore, the reflection light is unevenly distributed toward the direction of specular reflection as compared with that of the example shown in FIG. 3. In this case, the optical system 23 and the sensor 24 receive diffuse reflection light Ig that is diffusely reflected from the reading range D in the direction of the Z axis. Moreover, since the reflection light is unevenly distributed toward the direction of specular reflection, the diffuse reflection light Ig is less intense than the diffuse reflection light Im.

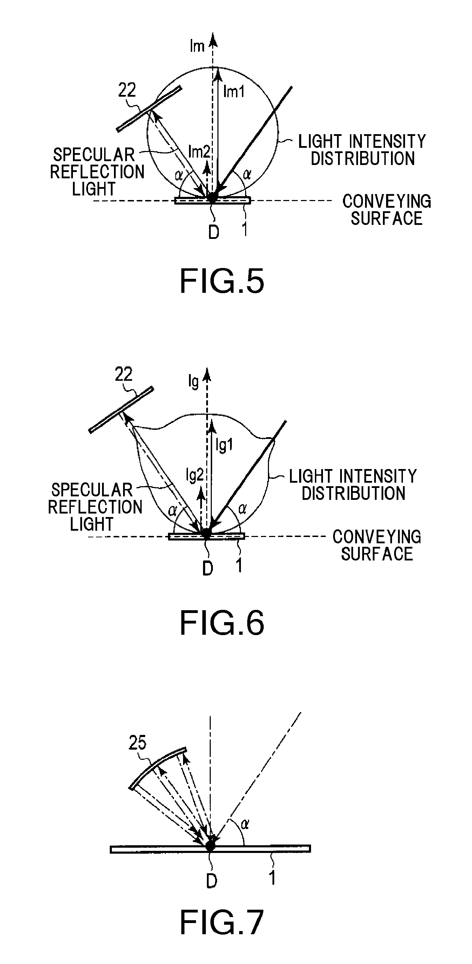

FIGS. 5 and 6 show examples in which the reflecting mirror 22 is used. Note that FIG. 5 shows the light intensity distribution in the case where light is irradiated onto a sheet 1 that is not very glossy, and FIG. 6 shows the light intensity distribution in the case where light is irradiated onto a sheet 1 that is very glossy.

As described above, light irradiated onto the sheet 1 from the illuminator 21 is incident on the reading range D on the sheet 1 at an angle α.

As in the example shown in FIG. 5, a portion of the light incident on the reading range D is diffusely reflected from the sheet 1 in a radial manner. Note that light that is diffusely reflected from the reading range D in the direction of the Z axis will be referred to as diffuse reflection light Im1. Also, a portion of the light incident on the reading range D is specularly reflected at an angle α. Note that in the example shown in FIG. 5, the diffuse reflection light is more intense than that of the example shown in FIG. 6, and the specular reflection light is less intense than that of the example shown in FIG. 6.

The reflecting mirror 22 reflects the light that has been specularly reflected at an angle α and makes the reflected light incident on the reading range D. The light that is reflected by the reflecting mirror 22 and is incident on the reading range D is diffusely reflected from the sheet 1 in a radial manner. A portion of this diffuse reflected light that is diffusely reflected in the direction of the Z axis will be referred to as diffuse reflection light Im2. In this case, the optical system 23 and the sensor 24 receive the diffuse reflection light Im1+Im2, which has been diffusely reflected from the reading range D in the direction of the Z axis.

Moreover, as in the example shown in FIG. 6, a portion of the light that is incident on the reading range D is diffusely reflected from the sheet 1 in a radial manner. Note that light that is diffusely reflected from the reading range D in the direction of the Z axis will be referred to as diffuse reflection light Ig1. Moreover, a portion of the light that is incident on the reading range D is specularly reflected at an angle α. Note that in the example shown in FIG. 6, the diffuse reflection light is less intense than that of the example shown in FIG. 5, and the specular reflection light is more intense than that of the example shown in FIG. 5. That is to say, the diffuse reflection light Ig1 is less intense than the diffuse reflection light Im1.

The reflecting mirror 22 reflects the light that has been specularly reflected at an angle α and makes the reflected light incident on the reading range D. The light that is reflected by the reflecting mirror 22 and is incident on the reading range D is diffusely reflected from the sheet 1 in a radial manner. The portion of this diffuse reflection light that is diffusely reflected in the direction of the Z axis will be referred to as diffuse reflection light Ig2. In this case, the optical system 23 and the sensor 24 receive the diffuse reflection light Ig1+Ig2, which is diffusely reflected from the reading range D in the direction of the Z axis. Note that the specular reflection light of the example shown in FIG. 6 is more intense than that of the example shown in FIG. 5. Accordingly, the diffuse reflection light Ig2 is more intense than the diffuse reflection light Im2.

In this manner, the reflecting mirror 22 can reduce the difference in the intensity of the diffuse reflection light depending on the gloss level of the sheet 1. More specifically, the reflecting mirror 22 can reduce the difference in the intensity of light which the optical system 23 receives by an amount corresponding to the difference between the diffuse reflection light Ig2 and the diffuse reflection light Im2.

Note that light that is reflected at angles near the angle of reflection of the specular reflection light is gradually attenuated in accordance with the differences from the angle α. Accordingly, light that is reflected at angles near the angle of reflection of the specular reflection light is more intense than the diffuse reflection light. However, the reflecting mirror 22 having a rectilinear shape when viewed from the direction of the X axis in FIG. 2 cannot make reflection light other than the specular reflection light incident on the reading range D. To address this issue, the image reader 20 may also be configured to include a reflecting mirror 25 having an arc shape when viewed from the direction of the X axis in FIG. 2, instead of the reflecting mirror 22.

FIG. 7 shows an example of the reflecting mirror 25. The image reader 20 includes the reflecting mirror 25 having the shape of an arc of a circle whose center is at the reading range D. More specifically, the reflecting mirror 25 has a specular surface having an arc shape formed by connecting loci of points equidistant from the reading range D extending in the direction of the X axis in FIG. 2. The specular surface of the reflecting mirror 25 can reflect light that is reflected from the reading range D and is incident on the reflecting mirror 25 back to the reading range D and makes the reflected light incident on the reading range D. That is to say, the reflecting mirror 25 can re-reflect light from the reading range D to the reading range D. With this configuration, the reflecting mirror 25 can make more reflection light incident on the reading range D again than in the examples shown in FIGS. 5 and 6. As a result, the reflecting mirror 25 can further reduce the difference between the diffuse reflection light Im1+Im2 that is diffusely reflected from the reading range D in the direction of the Z axis in the case where the sheet 1 is not very glossy and the diffuse reflection light Ig1+Ig2 that is diffusely reflected from the reading range D in the direction of the Z axis in the case where the sheet 1 is very glossy.

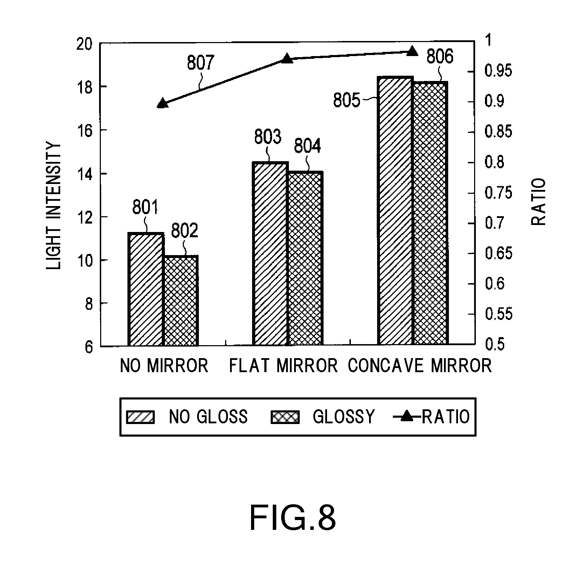

FIG. 8 shows examples of the intensity of the diffuse reflection light in the direction of the Z axis. A graph 801 shows the light intensity of the diffuse reflection light Im in in the direction of the Z axis in the case where no reflecting mirror is present and the sheet 1 is not very glossy. A graph 802 shows the light intensity of the diffuse reflection light Ig in the direction of the Z axis in the case where no reflecting mirror is present and the sheet 1 is very glossy.

A graph 803 shows the light intensity of the diffuse reflection light Im1+Im2 in the direction of the Z axis in the case where the reflecting mirror 22, which is a flat mirror, is present and the sheet 1 is not very glossy. A graph 804 shows the light intensity of the diffuse reflection light Ig1+Ig2 in the direction of the Z axis in the case where the reflecting mirror 22 is present and the sheet 1 is very glossy.

A graph 805 shows the light intensity of the diffuse reflection light Im1+Im2 in the direction of the Z axis in the case where the reflecting mirror 25, which is a concave mirror having an arc shape, is present and the sheet 1 is not very glossy. A graph 806 shows the light intensity of the diffuse reflection light Ig1+Ig2 in the direction of the Z axis in the case where the reflecting mirror 22 is present and the sheet 1 is very glossy.

A graph 807 shows the ratio of the diffuse reflection light in the direction of the Z axis between the case where the sheet 1 is not very glossy and the case where the sheet 1 is very glossy. As can be seen, in the case where no reflecting mirror is present, there is a large difference between the diffuse reflection light Im and the diffuse reflection light Ig. That is to say, the ratio of the diffuse reflection light Ig to the diffuse reflection light Im when the diffuse reflection light Im is taken as 1 is smaller than those in the other examples.

Moreover, in the case where the reflecting mirror 22 is present, the difference between the diffuse reflection light Im1+Im2 and the diffuse reflection light Ig1+Ig2 is smaller than that in the case where no reflecting mirror is present. That is to say, the ratio of the diffuse reflection light Ig1+Ig2 to the diffuse reflection light Im1+Im2 when the diffuse reflection light Im1+Im2 is taken as 1 is larger than that in the case where no reflecting mirror is present.

Furthermore, in the case where the reflecting mirror 25 is present, the difference between the diffuse reflection light Im1+Im2 and the diffuse reflection light Ig1+Ig2 is smaller than that in the case where the reflecting mirror 22 is present. That is to say, the ratio of the diffuse reflection light Ig1+Ig2 to the diffuse reflection light Im1+Im2 when the diffuse reflection light Im1+Im2 is taken as 1 is larger than that in the case where the reflecting mirror 22 is present.

As described above, the image reader 20 includes a reflecting mirror 22 or 25 that makes the specular reflection light that is specularly reflected from the reading range D on the sheet 1 incident on the reading range D again. Thus, the image reader 20 can complement the diffuse reflection light in the direction of the Z axis that is reduced when reflected from the reading range D in the case where the sheet 1 is very glossy with reflection light that is incident on the reading range D again. Accordingly, the image reader 20 can reduce the effect of the gloss level of the sheet 1. As a result, an image reading apparatus that can read images with higher accuracy and a sheet processing apparatus can be provided.

Note that although the image reader 20 in the above embodiments has been described as being configured to acquire an image from a sheet 1 while the sheet 1 is conveyed, the invention is not limited to this configuration. The sheet processing apparatus 100 may also have a configuration in which the sheet 1 is fixed, while the image reader 20 is moved to acquire a sheet image. In this case, the sheet processing apparatus 100 moves the illuminator 21, the reflecting mirror 22, the optical system 23, and the sensor 24 of the image reader 20 such that the reading range D of the image reader 20 scans the entire surface of the fixed sheet 1. With this configuration, the image reader 20 can acquire a sheet image with high accuracy as well.

Also, although the reflecting mirror 22 in the above embodiments has been described as being configured to include a specular surface that reflects light, the invention is not limited to this configuration. The reflecting mirror 22 may also be configured to include a re-reflection surface that reflects light at the same angle as the angle of incidence.

Note that the functions described in the above embodiments cannot only be configured using hardware, but can also be realized by loading programs by which those functions are defined into a computer using software. Also, each of the functions may be configured by either software or hardware that is selected as appropriate.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An image reading apparatus comprising:
an illumination unit (21) to irradiate a surface of a sheet (1) with light from an oblique direction at a predetermined angle of incidence (α);
a reading unit (24) to receive light reflected from a reading range on the sheet (1) and to acquire a sheet image; and
a reflecting mirror (22, 25) that is disposed in a direction of an angle of emission (α) that is equal to the angle of incidence (α), that has a specular surface that is parallel to the reading range (D), and that reflects light reflected from the sheet (1) toward the reading range (D) with the specular surface.

2. The image reading apparatus according to claim 1, wherein the specular surface of the reflecting mirror (25) has an arc shape defined by loci of points that are equidistant from the reading range (D).

3. The image reading apparatus according to claim 1 or 2, wherein the reading unit (24) is a line sensor (24) to image a linear reading range (D) on the sheet (1), and acquires a sheet image of the entire sheet (1) by successively imaging the reading range (D) from the sheet (1) while the sheet (1) is conveyed.

4. The image reading apparatus according to claim 1 or 2, wherein a sheet image of the entire sheet (1) is acquired by moving the line sensor (24), which is configured to image a linear reading range on the sheet (1), together with the illumination unit (21) and the reflecting mirror (22, 25) over the sheet (1) while the sheet (1) is at rest.

5. A sheet processing apparatus comprising:
a conveyance unit (12) to convey a sheet (1);
an illumination unit (21) to irradiate a surface of the sheet (1) with light from an oblique direction at a predetermined angle of incidence (α);
a reading unit (24) to receive light reflected from a reading range on the sheet (1) and to acquire a sheet image;
a reflecting mirror (22, 25) that is disposed in a direction of an angle of emission (α) that is equal to the angle of incidence (α), that has a specular surface that is parallel to the reading range (D), and that reflects light reflected from the sheet (1) toward the reading range (D) with the specular surface;
an identification unit (40) to identify the sheet (1) based on the sheet image and a preset reference parameter; and
a sorting processor (13, 15) to sort the sheet (1) based on an identification result of the identification unit (40).

6. The sheet processing apparatus according to claim 5, wherein the specular surface of the reflecting mirror (25) has an arc shape defined by loci of points that are equidistant from the reading range (D).

7. The sheet processing apparatus according to claim 5 or 6, wherein the reading unit (24) is a line sensor (24) to image a linear reading range (D) on the sheet (1), and acquires a sheet image of the entire sheet (1) by successively imaging the reading range (D) from the sheet (1) while the sheet (1) is conveyed.

8. The sheet processing apparatus according to claim 5 or 6, wherein a sheet image of the entire sheet (1) is acquired by moving the line sensor (24), which is configured to image a linear reading range on the sheet, together with the illumination unit (21) and the reflecting mirror (22, 25) over the sheet (1) while the sheet (1) is at rest.
